# FASCICULE DE BREVET EUROPEEN

(11) **EP 1 040 455 B1**
(45) Date de publication et mention de la délivrance du brevet: **05.10.2005**
(21) Numéro de dépôt: 98958295.2
(22) Date de dépôt: 02.12.1998
(51) Int. Cl.: G07F 7/10

(54) **PROCEDE DE GESTION D'APPLICATIONS EVOLUTIVES DANS UN SYSTEME TERMINAL/CARTE A PUCE**
VERWALTUNGSVERFAHREN FÜR ENTWICKLUNGSFÄHIGE ANWENDUNGEN IN EINEM SYSTEM ENDGERÄT/CHIPKARTE
METHOD FOR MANAGING OPEN-ENDED APPLICATIONS IN A TERMINAL/CHIP CARD SYSTEM

(30) Priorité: 19.12.1997 FR 9716195
(43) Date de publication de la demande: 04.10.2000
(73) Titulaire: GEMPLUS, 13881 Gémenos Cédex (FR)
(72) Inventeur: BEAUJARD, Olivier, F-92200 Neuilly (FR); HUET, Cédric, F-13600 La Ciotat (FR)
(86) Numéro de dépôt international: PCT/FR1998/002586
(87) Numéro de publication internationale: WO 1999/033032

(56) Documents cités:
- EP-A- 0 114 773
- EP-A- 0 490 455
- EP-A- 0 662 674
- EP-A- 0 717 381
- EP-A- 0 757 336
- WO-A-96/38826
- FR-A- 2 696 888

## Description

La présente invention a pour objet un procédé de gestion d'une transaction entre un terminal et une carte à puce. Elle vise également l'intervention d'un opérateur. Dans le cadre de l'invention, tant le terminal que la puce de la carte seront munis d'un processeur de traitement de signal.

On connaît les terminaux pour carte à puce utilisés notamment dans le domaine bancaire, dans le domaine de contrôle d'identité, dans les opérations de paiement ainsi que dans les applications de téléphone mobile de type GSM. Néanmoins, elle est applicable à tous les domaines dans lesquels un terminal entre en relation avec une carte à puce et un opérateur.

Le rappel ci-dessus des applications connues d'utilisation des cartes à puce dans des transactions est synonyme du fait que les terminaux et les cartes sont spécialisés. Dans la plupart des cas, les cartes sont des cartes uniquement munies de mémoire : le lecteur de carte - le terminal - possède un système d'exploitation pour, premièrement, entrer en relation avec la carte à puce, et deuxièmement, lancer un programme d'utilisation de la carte à puce. Par exemple dans le domaine bancaire, pour le retrait d'argent à une borne, le programme enregistré dans une mémoire programme du terminal est de nature à faire afficher sur un écran de ce terminal toutes les images nécessaires à la compréhension par l'opérateur des étapes à franchir pour obtenir satisfaction.

Ces programmes d'utilisation peuvent être très simples. Dans le cas où le terminal est un terminal de paiement, il ne fait que demander à l'opérateur de composer un code secret pour valider le paiement. Ils peuvent être également plus complexes. Et c'est justement le cas quand les terminaux sont des appareils de téléphone mobile. Dans ce dernier cas, le programme d'utilisation du terminal comporte une succession hiérarchique de menus présentant des options et que l'opérateur peut choisir afin de bénéficier d'une prestation particulière parmi de nombreuses prestations.

Il est connu de la demande EP-A-7173381 un système de procédé de traitement de transactions financières à l'aide de carte à puce contenant des instructions présélectionnées qui sont interprétées et exécutées par les terminaux. Le terminal peut afficher des fonctions financières disponibles dans la carte et exécuter celles sélectionnées par l'utilisateur. Toutefois, ce type de solution présente l'inconvénient de ne pas permettre aux la mise à jour des terminaux de l'état de la technique. En effet, il est de plus en plus envisagé de modifier le programme d'utilisation ou le système d'exploitation des terminaux. Le fonctionnement de la délivrance d'une prestation par un terminal auquel une carte à puce est connectée se produit de la façon suivante. Le terminal lance son système d'exploitation et se prépare à afficher certaines options (connues) qu'il est susceptible de proposer à l'opérateur. Le terminal interroge ensuite la carte pour savoir si la carte est susceptible de délivrer les options en question. Le cas échéant, il n'est affiché sur l'écran du terminal que les options autorisées par la carte. Le problème survient le jour où on veut faire bénéficier les porteurs de carte de nouvelles options alors que le système d'exploitation, et le programme d'application du terminal ignorent même l'existence de ces options et ne sont donc pas capables d'interroger la carte à puce sur sa potentialité à cet égard et encore moins pour la proposer à l'écran.

En plus du problème d'affichage proprement dit, il y a un problème sous-jacent d'exécution de l'option supplémentaire qui aurait été choisie dans le menu par l'opérateur. En effet, le choix d'une option revient soit à faire lancer par le terminal un sous-programme soit à provoquer un branchement à l'endroit particulier du logiciel d'exploitation du terminal. L'inexistence d'un tel sous-programme, quand il s'agit d'une option nouvelle ou d'un point de branchement correspondant, rend au-delà de l'affichage de l'option, l'exécution d'une option supplémentaire impossible.

En perfectionnement, on préférera que la prestation relative à une option supplémentaire s'accompagne d'une exécution, par le processeur du terminal et/ou de la carte à puce, de certaines actions. Dans ce cas, avec l'invention on montrera qu'on y arrive sans avoir à changer au préalable le système d'exploitation ou le programme d'utilisation du terminal et de la carte à puce.

Le principe de l'invention consiste essentiellement à munir le terminal d'un programme d'interface et à munir la carte d'une mémoire de liens à laquelle est associé un programme de lecture et de traduction. Ce programme d'interface est prévu pour lire la mémoire de liens par l'intermédiaire du programme de lecture et de traduction. La lecture de cette mémoire de liens est sélective en fonction de critères connus. Ce programme prélève alors dans la mémoire de liens de la carte tous les enregistrements correspondant à la sélection. Il est ensuite capable, en combinaison avec les programmes normalement résidant dans le terminal, de présenter les options et les exécuter.

La mise à jour et l'évolution des applications n'ont pas alors besoin d'être effectuées dans le terminal et dans la carte puisque l'information relative aux options disponibles est uniquement présente dans la mémoire de liens de la carte.

L'invention a donc pour objet un procédé de gestion d'une transaction entre un terminal muni d'un processeur, une carte à puce munie d'un processeur et un opérateur qui sélectionne avec des commandes du terminal des actions à faire exécuter par ce terminal, caractérisé en ce qu'il comporte les étapes suivantes:
- mémorisation, dans une mémoire non volatile de la carte, d'une mémoire de liens et d'un programme de lecture et de traclusion de la mémoire de liens, chaque lien de la mémoire de liens comportant, dans un enregistrement de cette mémoire de liens, une désignation d'une option à choisir dans un menu liée à un critère de sélection de cette option et un ensemble de références à des actions à faire exécuter,
- exécution par le programme de lecture et de traduction d'une lecture sélective selon au moins un des critères de la mémoire de liens,
- exécution par un programme d'interface du terminal des désignations résultant de la mise en oeuvre du programme de lecture et de traduction de la mémoire de liens pour d'afficher les désignations incluant les options sélectionnées,
- désignation par l'opérateur du terminal de l'option sélectionnée, et
- exécution par le processeur du terminal de l'action pour exécuter l'option sélectionnée.

L'invention a également pour objet un procédé comprenant en outre une étape d'exécution par le processeur de la carte des instructions résultant de la traduction d'une référence à une action à exécuter.

En variante, l'invention a également pour objet un procédé comprenant en outre une étape pour faire exécuter le programme de lecture et de traduction sélective de la mémoire de liens, avec attribution à chaque enregistrement de la mémoire de liens d'un identifiant d'objet, et sélection des enregistrements de la mémoire de liens qui comporte un même identifiant d'objet.

En outre, l'invention a pour objet un procédé comportant également les étapes d'attribution à chaque enregistrement de la mémoire de liens d'une information de présentation pour le terminal, et présentation au terminal du résultat de la traduction avec cette information de présentation.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1: la représentation d'un terminal et d'une carte à puce utilisables pour mettre en oeuvre le procédé de l'invention;
- figures 2a à 2d: des représentations d'affichages provoqués par le programme de l'invention sur un écran du terminal de la figure 1;
- figure 3: la représentation schématique d'une mémoire de liens utile pour mettre en oeuvre le procédé de l'invention.

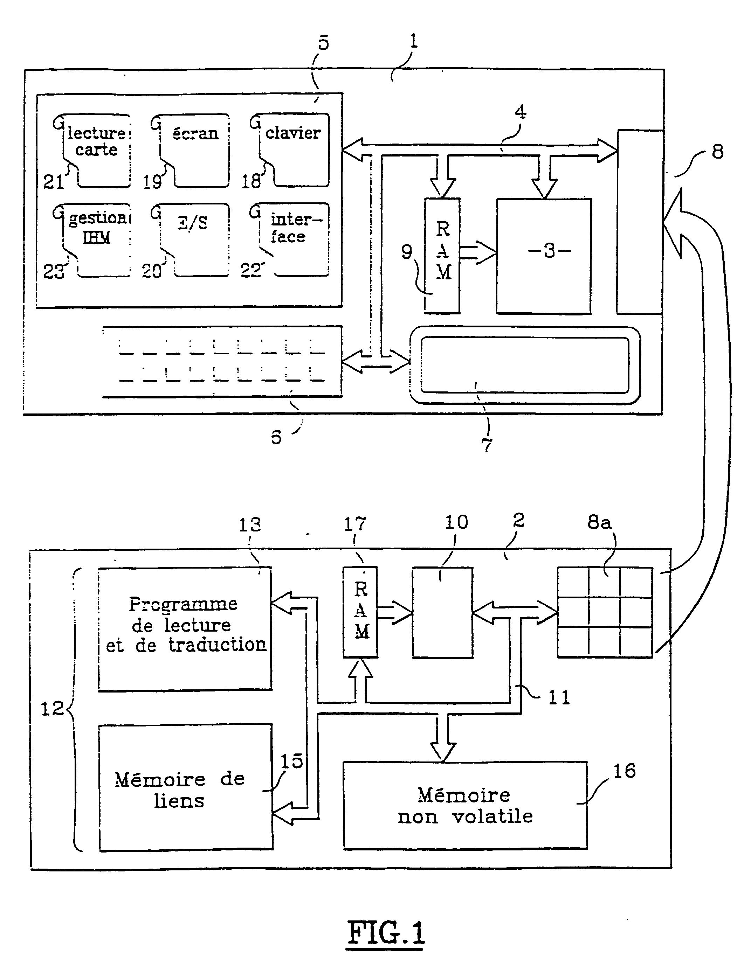

La figure 1 montre un terminal 1 et une carte à puce 2 utilisés pour mettre en oeuvre le procédé de l'invention. Le terminal comporte un processeur de traitement 3 en relation, par l'intermédiaire d'un bus 4, pour simplifier un bus de commandes, de données, et d'adresses, avec une mémoire programme 5, un clavier 6 de commande, un écran 7 de visualisation, une interface 8 d'entrée-sortie, et une mémoire 9 de travail. Le clavier 6 sert à un opérateur, non représenté, à entrer des commandes pour provoquer l'accomplissement de certaines prestations par le terminal 1. L'interface 8 d'entrée-sortie est destinée à permettre l'entrée en relation avec la carte à puce 2. Elle comporte notamment, un connecteur pour se connecter avec un connecteur 8a de la carte à puce 2.

La puce de la carte 2 comporte également un processeur de traitement 10 en relation par un bus 11 d'adresses de commandes et de données, avec un jeu de mémoires 12, une mémoire de données 16 et une mémoire de travail 17. La mémoire programme 5 du terminal ainsi que le jeu 12 de mémoires programmes de la carte et la mémoire de données 16 de cette dernière sont des mémoires non volatiles. Le jeu 12 de mémoires de la carte comporte, de préférence une mémoire 15 de liens et une mémoire 13 de lecture et de traduction de la mémoire de liens.

Parmi les programmes contenus dans le système d'exploitation du terminal 1, et schématiquement représentés comme mémorisés dans la mémoire 5, on retiendra les programmes permettant d'effectuer, les opérations désirées. Ces programmes comporteront par exemple un programme 18 de gestion du clavier 6, un programme 19. de gestion de l'écran 7, un programme 20 de gestion de l'interface d'entrée-sortie 8 et un programme 23 servant d'interface homme/machine entre l'opérateur et le terminal.

De manière à pouvoir lire les cartes qui seraient des cartes à mémoire seulement (sans processeur 10), la mémoire 5 comportera également un programme 21 de lecture des mémoires de ces cartes.

Elle comporte enfin un programme 22 qui est capable d'assurer la relation avec la carte à puce 2.

Le programme 13 lit et traduit, dans une représentation conventionnée pour l'interface 8a, les objets de la mémoire de liens 15 et les transporte dans la mémoire de travail 17 où ils sont mis à la disposition du terminal via l'interface 8a. Le but principal est que les informations à afficher sur l'écran 7 arrivent sur le bus 4. Elles y sont mises par le processeur 3 au moyen des programmes 22 et 23. Les actions de l'utilisateur, transmises par le clavier 6, au moyen du programme de gestion 18 sont traduites par le programme 22; le but étant de transmettre ces actions au programme 13 via les interfaces 8 et 8a. Enfin, en fonction de la mémoire de liens 15 et des actions transmises, le programme 13 peut déterminer la suite de la session.

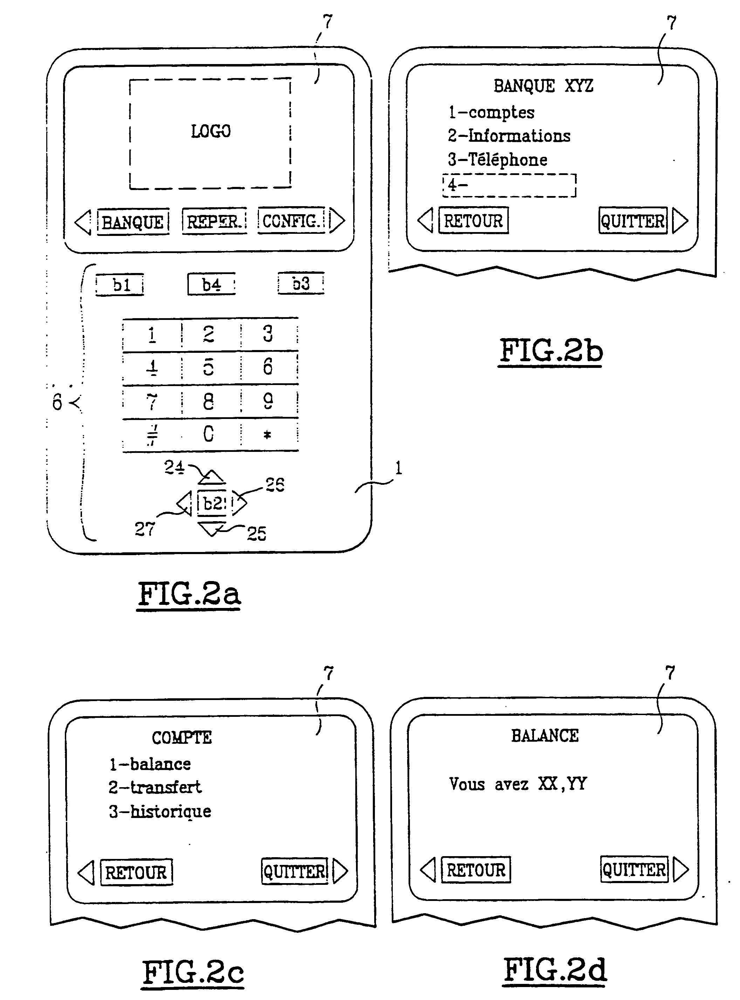

Les figures 2a à 2d montrent d'une manière figurative respectivement le terminal 1 muni de son écran 7 et de son clavier 6.

Sur la figure 2a, la totalité du terminal 1 est représentée; sur les figures 2b à 2d, on a seulement représenté l'écran pour montrer la navigation d'un opérateur parmi les différentes options des menus proposés. Le terminal représenté étant un terminal téléphonique, le clavier 6 comporte les touches 1 à 9 et 0, ainsi que la touche dièse et la touche étoile. Il comporte par ailleurs un jeu de boutons b1 à b4, ainsi qu'un jeu de flèches 24 à 27 permettant, à la manière d'une boule de manoeuvre ou d'une souris d'un micro-ordinateur, de déplacer une surbrillance dans l'écran. Ainsi, la surbrillance est placée sur une option BANQUE dans la figure 2a alors que deux autres options REPER. (pour répertoire) et CONFIG. (pour configuration) sont également représentées.

Les fonctions des boutons b1 à b4 peuvent être normalisées ou libres. La sélection d'une option peut être opérée par la manipulation des flèches 24 à 27, pour la mettre en surbrillance, et par appui sur le bouton b2 pour être effectuée. Dans un autre mode d'action, les boutons b3, b4 et b1 sont situés en regard de l'affichage sur l'écran 7 de certaines options, et le choix de l'un de ces boutons comprend la sélection de l'option choisie qui est juste en regard.

Un tel mode de sélection implique, figure 2b, l'affichage sur l'écran 7 des différentes sous-options correspondant à une option choisie. Ainsi, pour l'application BANQUE, l'affichage comportera, dans un exemple, dans une première ligne, la désignation BANQUE XYZ du nom de la banque désigné dans la carte à puce 2. Aux lignes 2, 3, 4 et 5 précédées d'un numéro de rang 1, 2, 3 et 4, apparaîtront les désignations de sous-options disponibles. On a représenté une sous-option Comptes. L'opérateur peut vouloir, avec elle, faire une opération en relation avec son compte en banque. Une sous-option Informations permet de faire afficher des informations sur la banque: son adresse, les heures d'ouverture des guichets, etc. Une sous-option Téléphone permet en la sélectionnant d'obtenir directement une communication téléphonique avec la banque.

Les figures 2c et 2d montrent ce qui se produit si on choisit la sous-option Compte dans le menu BANQUE, et si on choisit la sous-sous-option Balance dans la sous-option Compte.

Dans l'état de la technique, le programme 22 était capable de mettre en oeuvre ces trois options. Pour des raisons de développement du service de la banque, la banque a pu avoir voulu mettre à disposition de ses clients un service d'assurance. Ce service, apparaissant dans la cinquième ligne avec le rang 4 dans l'écran 7, n'était pas prévu dans le programme 22. Normalement ce programme 22 ne peut pas l'afficher sur l'écran 7. Au delà de l'affichage pur, la prestation correspondante ne peut pas non plus être lancée dans l'état de la technique.

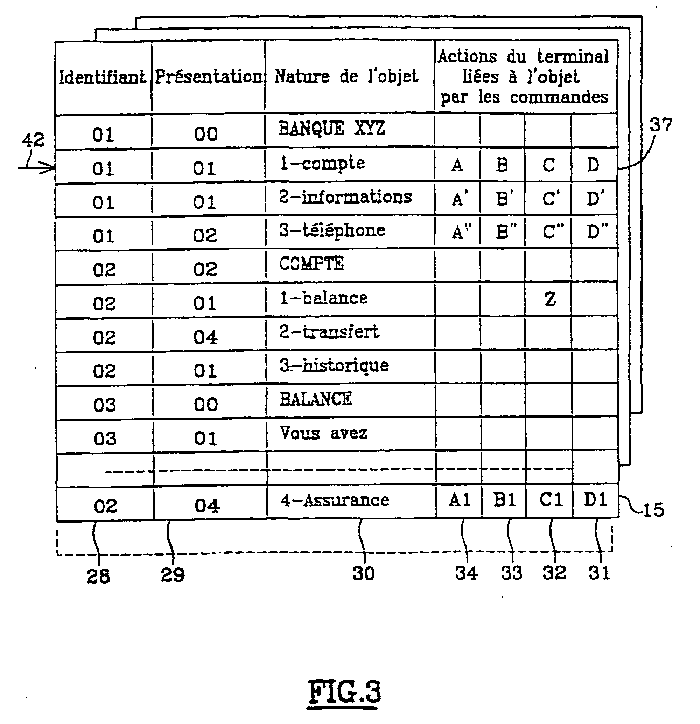

La figure 3 montre le moyen essentiel de l'invention constitué par la mémoire de liens 15. Cette mémoire est une mémoire, de préférence, de type programmable et effaçable de façon à pouvoir la mettre à jour. La mémoire 15, organisée sous forme de table, est dite mémoire de liens parce qu'elle comporte dans ses enregistrements des liens entre des informations de types différents. Chaque enregistrement de la table de liens comporte pour chaque type d'informations, un certain nombre d'octets. Pour un premier type 28, trois de ces octets, par exemple les trois premiers, représentent un identifiant d'objet. On appelle objet à garder, l'ensemble des informations devant apparaître à un moment donné dans un écran 7 lorsqu'une option ou une sous-option a été choisie.

Pour un autre type d'informations 29, dit de présentation, la table 15 comporte également de préférence, mais ce n'est pas obligatoire, deux octets (ou un seul octet, ou même trois ou quatre bits), pour présenter l'objet dans l'écran. Sur un certain nombre d'octets suivants, en colonne 30, par exemple douze octets, la table 15 mentionne un type d'informations représentant la nature de l'objet. Ainsi, la désignation correspondant à l'objet peut être inscrite dans les douze octets telle qu'elle doit être affichée.

Enfin, dans des colonnes référencées 31 à 34, on a indiqué des références d'actions, liées aux objets et déclenchables par des boutons particuliers, ou une configuration particulière de boutons du clavier 6. Dans le cadre de l'utilisation des téléphones de type GSM, la norme a défini et imposé l'utilisation de quatre boutons. C'est pour cette raison qu'on a représenté ici quatre colonnes. Néanmoins, il serait possible de disposer d'un nombre de boutons différent et de placer dans chaque enregistrement en correspondance un nombre de colonnes différent. Dans chaque enregistrement, à l'endroit de chaque colonne 31 à 34, on a réservé une place, dans un exemple, correspondant à un octet. La colonne 31 correspond à l'action qu'on est susceptible de lancer en appuyant sur le bouton b1. La colonne 32 correspond à une action qu'on est susceptible de lancer avec le bouton b2, la colonne 33 avec le bouton b3 et la colonne 34 avec le bouton b4.

Les liens dont il est question dans la mémoire de liens associent en conséquence, au moins la nature d'un objet, colonne 30, avec l'identifiant de l'objet, colonne 28. S'il ne s'agit pas d'afficher seulement des informations mais de lancer également des opérations, le lien concerne l'association de la nature de l'objet, colonne 30, avec l'identifiant de l'objet, colonne 28, et avec la liste, colonnes 31 à 34, des actions correspondant aux différents boutons commandables.

De préférence, bien entendu, la place de l'option ou de la sous-option dans l'écran est également associée à l'enregistrement.

Conformément à ce qui a été vu dans la figure 2a, la mémoire de liens 15 comporte un identifiant d'objet 01 pour tout ce qui concerne la banque avec des présentations d'objet dans l'écran définies par les codes de la colonne 29.

On a considéré par ailleurs que l'image apparaissant dans l'écran de la figure 2c est un deuxième objet. Les libellés affichés correspondent à des renseignements correspondant au numéro 02 dans des enregistrements de la mémoire 15. La sous-sous-option BALANCE, qui est le troisième objet, comporte deux enregistrements de l'objet, un enregistrement pour le libellé BALANCE, et un autre enregistrement pour VOUS AVEZ. Le but est dans un exemple d'indiquer un solde. Ainsi de suite, les différentes options peuvent avoir été enregistrées dans la mémoire 15.

Au moment où la banque décide de mettre à la disposition de ses clients l'option complémentaire Assurance, elle met à jour les cartes de ses clients: elle y insère une ligne avec un identifiant d'objet 02 en colonne 28, correspondant à l'objet Banque, un numéro 04 de présentation de l'objet en colonne 29, une indication 4-Assurance en colonne 30, et des références à des actions D1, C1, B1, A1 dans les colonnes 31 à 34.

Les figures 2b à 2d montrent par ailleurs, des indications en bas d'écran RETOUR ou QUITTER qui sont des informations d'aide qui peuvent être imposées par une norme, ou par une habitude dans un domaine. On peut faire gérer l'affichage de ces informations par un programme 19 de gestion d'écran classique. Les libellés d'aide, RETOUR ou QUITTER, peuvent être placés de préférence au-dessus des boutons b1 et b3 qui leur correspondent dans la norme.

Dans les colonnes 31 à 34, on a montré que les actions pouvaient être variées et différenciées comme on le désirait, d'un enregistrement à l'autre. Par exemple, pour l'option 1-Balance du menu COMPTE, figure 2c, l'appui sur le bouton b2 lorsque le pointeur 42 pointe sur cette option, provoque une action référencée Z. L'action Z aura pour effet, premièrement de faire afficher le troisième objet avec ses deux lignes d'intitulés BALANCE en dessous de laquelle apparaît VOUS AVEZ. L'ordre référencé par Z sera néanmoins plus complet. Il comporte, à l'initiative du processeur 3 qui met en oeuvre le programme de lecture et de traduction 13, l'exécution d'une liaison téléphonique avec la banque concernée, une interrogation du solde du compte (avec des mots de passe et des codes secrets de sécurité nécessaires), un transfert du solde lu dans la liaison téléphonique, et l'affichage du montant correspondant XX,YY à droite de l'intitulé VOUS AVEZ. Eventuellement, il pourrait y avoir constitution d'un troisième objet, enregistrable dans la mémoire 15, et correspondant justement au montant XX,YY. Dans ce cas, l'affichage provoqué par l'interface spécifique comportera une option d'affichage du solde ancien ou une option de rafraîchissement, c'est-à-dire lancement des opérations vues ci-dessus.

## Revendications

1. Procédé de gestion d'une transaction entre un terminal (1) muni d'un processeur (3), une carte à puce (2) munie d'un processeur (10), et un opérateur qui sélectionne avec des commandes (b1 à b4) du terminal des actions à faire exécuter par ce terminal, **caractérisé en ce qu'**il comporte les étapes suivantes:
- mémorisation, dans une mémoire (12) non volatile de la carte, d'une mémoire de liens (15) et d'un programme (13) de lecture et de traduction de la mémoire de liens, chaque lien de la mémoire de liens comportant, dans un enregistrement de cette mémoire de liens, une désignation (30) d'une option à choisir dans un menu, l'option étant liée à un critère (28) de sélection de cette option, et un ensemble (31 à 34) de références à des actions à faire exécuter,
- exécution par le programme de lecture et de traduction (13) d'une lecture sélective selon au moins un des critères (28) de la mémoire de liens,
- exécution par un programme d'interface (22) du terminal des options résultant de la mise en oeuvre du programme de lecture et de traduction (13) de la mémoire de liens (15) pour d'afficher les désignations incluant les options sélectionnées,
- désignation par l'opérateur du terminal de l'option sélectionnée, et
- exécution par le processeur (3) du terminal de l'action pour exécuter l'option sélectionnée

2. Procédé selon la revendication 1, **caractérisé en ce qu'**il comporte en outre une étape d'exécution par le processeur (10) de la carte des instructions résultant de la traduction d'une référence à une action à exécuter.

3. Procédé selon l'une des revendications 1 et 2, **caractérisé en ce que**:
- pour faire exécuter le programme de lecture et de traduction (13) sélective de la mémoire de liens, attribution à chaque enregistrement de la mémoire de liens d'un identifiant (28) d'objet, et
- sélection des enregistrements de la mémoire de liens qui comporte un même identifiant d'objet.

4. Procédé selon l'une des revendications 1 à 3, **caractérisé en ce qu'**il comporte en outre les étapes suivantes:
- attribution à chaque enregistrement de la mémoire de liens d'une information de présentation (29) pour le terminal, et
- présentation au terminal le résultat de la traduction avec cette information de présentation.

## Claims

1. A method for managing a transaction between a terminal (1) fitted with a processor (3), a chip card (2) fitted with a processor (10), and an operator who selects, by means of commands (b1 to b4) on the terminal, the actions to be carried out by the terminal, **characterised in that** it comprises the following stages:
- memorising, in a non-volatile memory (12) of the card, a memory of links (15) and a reading and translation program (13) for the memory of links, in which each link in the memory of links comprises, in an entry of this memory of links, the name (30) of an option to be chosen from a menu, in which the option is linked to a selection criterion (28) of this option, and a set (31 to 34) of references for the actions to be executed,
- execution by the reading and translation program (13) of a selective reading according to at least one of the criteria (28) of the memory of links,
- execution by an interface program (22) of the terminal of the names that result from rolling out the reading and translation (13) program of the memory of links (15) in order to display the names including the selected options,
- definition of the selected option by the operator of the terminal, and
- execution by the processor (3) of the terminal of the action to execute the selected option.

2. A method according to claim 1, **characterised in that** is also includes a stage of execution by the card processor (10) of instructions that result from translating a reference to an action to be executed.

3. A method according to claims 1 or 2, **characterised in that**:
- it allocates an object identifier (28) to each entry in the memory of links in order to execute the selective reading and translation program (13) of the memory of links, and
- it selects entries in the memory of links that have the same object identifier.

4. A method according to any of the claims from 1 to 3, **characterised in that** it comprises, among others, the following stages:
- allocating presentation information (29) for the terminal to each entry in the memory of links, and
- presenting the results of the translation to the terminal with this presentation information.

## Patentansprüche

1. Verwaltungsverfahren einer Transaktion zwischen einem mit einem Prozessor (3) ausgestatteten Endgerät (1), einer mit einem Prozessor (10) ausgestatteten Chipkarte (2) und einem Benutzer, der anhand der Bedienflächen (b1 bis b4) des Endgeräts die von diesem Endgerät auszuführenden Aktionen wählt, **dadurch gekennzeichnet, dass** es die folgenden Schritte umfasst:
- Abspeichern, in einem nicht flüchtigen Speicher (12) der Karte, eines Link-Speichers (15) und eines Auslese- und Übersetzungsprogramms (13) des Link-Speichers, wobei jeder Link des Link-Speichers in einer Aufzeichnung dieses Link-Speichers eine Bezeichnung (30) einer in einem Menü zu wählenden Option umfasst, die mit einem Auswahlkriterium (28) dieser Option und einer Reihe (31 bis 34) von Hinweisen auf die auszuführenden Aktionen verbunden ist,
- Ausführen durch das Auslese- und Übersetzungsprogramm (13) eine selektiven Auslesung gemäß mindestens einem der Kriterien (28) des Link-Speichers,
- Ausführen durch das Schnittstellenprogramm (22) des Endgeräts der aus dem Einsatz des Auslese- und Übersetzungsprogramms (13) des Link-Speichers (15) resultierenden Bezeichnungen, um die die gewählten Optionen enthaltenden Bezeichnungen anzuzeigen,
- Bezeichnung der gewählten Option durch den Benutzer des Endgeräts, und
- Ausführen der Aktion durch den Prozessor (3) des Endgeräts, um die gewählte Option auszuführen.

2. Verfahren gemäß Anspruch 1, **dadurch gekennzeichnet, dass** es ferner einen Ausführungsschritt durch den Prozessor (10) der Karte der aus der Übersetzung eines Hinweises auf eine auszuführende Aktion resultierenden Anweisungen umfasst.

3. Verfahren gemäß einem der Ansprüche 1 und 2, **dadurch gekennzeichnet, dass** es ferner einen Schritt umfasst:
- für die Ausführung des selektiven Auslese- und Übersetzungsprogramms (13) des Link-Speichers, für die Zuweisung einer Objektidentifikationsnummer (28) zu jeder Aufzeichnung des Link-Speichers, und
- für die Auswahl der Aufzeichnungen des Link-Speichers mit gleicher Objektidentifikationsnummer.

4. Verfahren gemäß einem der Ansprüche 1 bis 3, **dadurch gekennzeichnet, dass** es ferner die folgenden Schritte umfasst:
- Zuweisung einer Darstellungsinformation (29) für das Endgerät zu jeder Aufzeichnung des Link-Speichers, und
- Darstellung des Ergebnisses der Übersetzung mit dieser Darstellungsinformation für das Endgerät.
